(19) 

Europäisches
Patentamt
European
Patent Office
Office européen
des brevets

(11) **EP 4 383 933 A1**

(12) **EUROPEAN PATENT APPLICATION**
published in accordance with Art. 153(4) EPC

(43) Date of publication:
**12.06.2024 Bulletin 2024/24**

(21) Application number: **22851966.6**

(22) Date of filing: **26.07.2022**

(51) International Patent Classification (IPC):
***H04W 76/28*** *(2018.01)*

(52) Cooperative Patent Classification (CPC):
**H04W 76/28;** Y02D 30/70

(86) International application number:
**PCT/CN2022/107915**

(87) International publication number:
**WO 2023/011252 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 CN 202110904394**

(71) Applicant: **Datang Mobile Communications
Equipment Co., Ltd.
Beijing 100085 (CN)**

(72) Inventors:
• **LUO, Chen
Beijing 100085 (CN)**

• **WANG, Jiaqing
Beijing 100085 (CN)**
• **ZHANG, Yinghao
Beijing 100085 (CN)**
• **SU, Yuwan
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **DRX COMMUNICATION METHOD, TERMINAL, AND COMPUTER READABLE STORAGE
MEDIUM**

(57)    Embodiments of this disclosure provide a DRX communications method, a terminal and a computer readable storage medium, and pertain to the technical field of communications. The method comprises: receiving, by a terminal, configuration information from a network device, where the configuration information is used for the terminal to determine one or more target DRX-ON durations within one DRX cycle based on multiple wake-up signals (WUSs); performing, by the terminal, WUS monitoring based on the configuration information, and waking up or not waking up, by the terminal, the one or more target DRX-ON durations based on a monitoring result.

**FIG. 2**

**Description**

CROSS-REFERENCE TO RELATED APPLICATION

This application claims priority to Chinese Patent Application No. 202110904394.3 filed in China on August 6, 2021, the disclosure of which is incorporated by reference herein in its entirety.

TECHNICAL FIELD

The present disclosure relates to the field of communications technology, in particular to a DRX communications method, a terminal and a computer readable storage medium.

BACKGROUND

In Release 16 (Rel-16), downlink control information (DCI) format 2_6 may be indicated based on a buffer, that is, an indicator of DCI format 2_6 may indicate whether user equipment (UE) is to monitor a physical downlink control channel (PDCCH) in a subsequent discontinuous reception (DRX) cycle based on whether there is data in the buffer. If a data packet arrives after DCI format 2_6, a terminal cannot change an on/off state of a DRX activation timer, because the terminal will no longer receive other wake-up signal (WUS) after successfully receiving the DCI format 2_6. The data packet has to be transmitted in a next DRX cycle, which increases a waiting delay for transmission. If a data packet arrives before DCI format 2_6, a WUS may indicate that a timer for a next DRX-ON duration is to be started, which however may increase a waiting delay for transmission as well if a distance between the data packet and a starting position of the DRX-ON duration is long.

SUMMARY

Embodiments of the present disclosure is to provide a DRX communications method, a terminal and a computer readable storage medium, so as to solve a problem in the prior art of mismatch between a DRX-ON duration and an arrival moment of a data packet.

In a first aspect, an embodiment of the present disclosure provides a discontinuous reception (DRX) communications method. The method includes:

receiving, by a terminal, configuration information from a network device, where the configuration information is used for the terminal to determine one or more target DRX-ON durations within one DRX cycle that are determined based on multiple WUSs; and
performing, by the terminal, WUS monitoring based on the configuration information, and waking up or not waking up the one or more target DRX-ON durations based on a monitoring result.

In a possible implementation, the configuration information is used for the terminal to determine multiple WUS monitoring positions and/or multiple WUS monitoring durations, and/or multiple candidate DRX-ON durations within one DRX cycle, where starting positions of the multiple candidate DRX-ON durations are determined based on the multiple WUS monitoring positions or the multiple WUS monitoring durations.

In a possible implementation, the configuration information includes: configuration information of the WUS monitoring positions and/or the WUS monitoring durations; the configuration information of the WUS monitoring positions and/or the WUS monitoring durations is used for the terminal to determine the multiple WUS monitoring positions and/or the multiple WUS monitoring durations.

In a possible implementation, the configuration information includes: configuration information of the WUS monitoring positions and/or the WUS monitoring durations, and configuration information of the candidate DRX-ON durations associated with the WUS monitoring positions and/or the WUS monitoring durations. The configuration information of the WUS monitoring positions and/or the WUS monitoring durations is used for the terminal to determine the multiple WUS monitoring positions and/or multiple WUS monitoring durations. The configuration information of the candidate DRX-ON durations associated with the WUS monitoring positions and/or the WUS monitoring durations is used for the terminal to determine starting positions of the candidate DRX-ON durations based on the WUS monitoring positions and/or the WUS monitoring durations.

In a possible implementation, the configuration information of the WUS monitoring positions and/or the WUS monitoring durations at least includes one or more of the following: starting positions of one or more WUS monitoring positions; a duration of continuous monitoring.

In a possible implementation, the configuration information of the candidate DRX-ON durations at least includes:

offset values of starting positions of one or more candidate DRX-ON durations relative to the WUS monitoring positions and/or the WUS monitoring durations; and/or higher-layer signaling configuration.

In a possible implementation, the performing, by the terminal, WUS monitoring based on the configuration information, and waking up or not waking up the target DRX-ON durations in the one or more candidate DRX-ON durations based on the monitoring result includes: performing, by the terminal, multiple WUS monitoring based on the configuration information, and in a case where a detected WUS satisfies a first rule, waking up or not waking up a candidate DRX-ON duration based on indication information of the detected WUS, where the first rule is used for the terminal to determine the indication information of the WUS for waking up or not waking up the candidate DRX-ON duration.

In a possible implementation, the performing, by the terminal, multiple WUS monitoring based on the configuration information, and in a case where the detected WUS satisfies the first rule, waking up or not waking up the candidate DRX-ON duration based on the indication information of the detected WUS includes one or more of the following steps:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected.

In a possible implementation, the performing, by the terminal, WUS monitoring based on the configuration information, and waking up or not waking up the target DRX-ON durations among the one or more candidate DRX-ON durations based on the monitoring result includes: performing, by the terminal, multiple WUS monitoring based on the configuration information, and in a case where a detected WUS in one DRX cycle satisfies a second rule, determining a starting position of a candidate DRX-ON duration associated with the detected WUS, and determining to wake up or not wake up the associated candidate DRX-ON duration based on indication information of the detected WUS, where multiple WUS monitoring positions and/or multiple WUS monitoring durations within one DRX cycle correspond to the starting positions of multiple candidate DRX-ON durations, and the second rule is used for the terminal to determine the indication information of the WUS for waking up or not waking up the associated candidate DRX-ON duration.

In a possible implementation, the performing, by the terminal, multiple WUS monitoring based on the configuration information, and in a case where a detected WUS in one DRX cycle satisfies a second rule, determining a starting position of a candidate DRX-ON duration associated with the detected WUS, and determining to wake up or not wake up the associated DRX-ON duration based on the indication information of the detected target WUS includes one or more of the following:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS;

performing WUS monitoring on all monitoring occasions within each WUS monitoring duration in one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

In a possible implementation, the configuration information further includes a preset quantity, and the method further includes: in a case where a quantity of the target DRX-ON durations waked up by the terminal reaches the preset quantity, stopping, by the terminal, WUS monitoring, and stopping, by the terminal, the waking up or not waking up of remaining candidate DRX-ON durations.

In a possible implementation, in a case where the WUS monitoring position or the WUS monitoring duration overlaps or does not overlap with a monitoring window of downlink control information (DCI) in a target format, the method includes one or more of the following:

monitoring, by the terminal, for the WUS;
monitoring, by the terminal, for the DCI in the target format;

monitoring, by the terminal, for both the WUS and the DCI in the target format.

In a possible implementation, the WUS is a physical layer signal based on a DCI, or the WUS is a physical layer signal based on a sequence.

In a second aspect, an embodiment of the present disclosure provides a terminal. The terminal includes:

a receiving unit, configured for the terminal to receive configuration information from a network device, where the configuration information is used for the terminal to determine one or more target DRX-ON durations within a DRX cycle that are determined based on multiple WUSs; and

a processing unit, configured for the terminal to perform WUS monitoring based on the configuration information, and wake up or not wake up the one or more target DRX-ON durations based on a monitoring result.

In a possible implementation, the configuration information is used for the terminal to determine multiple WUS monitoring positions and/or multiple WUS monitoring durations, and/or multiple candidate DRX-ON durations within one DRX cycle, where starting positions of the multiple candidate DRX-ON durations are determined based on the multiple WUS monitoring positions or the multiple WUS monitoring durations.

In a possible implementation, the configuration information includes: configuration information of the WUS monitoring positions and/or the WUS monitoring durations. The configuration information of the WUS monitoring positions and/or the WUS monitoring durations is used for the terminal to determine the multiple WUS monitoring positions and/or the multiple WUS monitoring durations.

In a possible implementation, the configuration information includes: configuration information of the WUS monitoring positions and/or the WUS monitoring durations, and configuration information of the candidate DRX-ON durations associated with the WUS monitoring positions and/or the WUS monitoring durations. The configuration information of the WUS monitoring positions and/or the WUS monitoring durations is used for the terminal to determine monitoring positions and/or monitoring durations of multiple WUSs. The configuration information of the candidate DRX-ON durations associated with the WUS monitoring positions and/or the WUS monitoring durations is used for the terminal to determine starting positions of the candidate DRX-ON durations based on the WUS monitoring positions and/or the WUS monitoring durations.

In a possible implementation, the configuration information of the WUS monitoring positions and/or the WUS monitoring durations at least includes one or more of the following: starting positions of one or more WUS monitoring positions; a duration of continuous monitoring.

In a possible implementation, the configuration information of the candidate DRX-ON durations at least includes: offset values of starting positions of one or more candidate DRX-ON durations relative to the WUS monitoring positions and/or the WUS monitoring durations; and/or higher-layer signaling configuration.

In a possible implementation, the processing unit is further configured for the terminal to perform multiple WUS monitoring based on the configuration information, and in a case where a detected WUS satisfies a first rule, wake up or not wake up a candidate DRX-ON duration based on indication information of the detected WUS, where the first rule is used for the terminal to determine the indication information of the WUS for waking up or not waking up the candidate DRX-ON duration.

In a possible implementation, the processing unit is further configured to perform one or more of the following steps:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected.

In a possible implementation, the processing unit is further configured for the terminal to perform multiple WUS monitoring based on the configuration information, and in a case where a detected WUS in one DRX cycle satisfies a second rule, determine a starting position of a candidate DRX-ON duration associated with the detected WUS, and determine to wake up or not wake up the associated DRX-ON duration based on indication information of the detected WUS, where multiple WUS monitoring positions and/or multiple WUS monitoring durations within one DRX cycle correspond to the starting positions of the multiple candidate DRX-ON durations, and the second rule is used for the terminal to determine the indication information of the WUS for waking up or not waking up the associated candidate DRX-ON duration.

In a possible implementation, the processing unit is further configured to perform one or more of the following steps:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS; performing WUS monitoring on all monitoring occasions within each WUS monitoring duration in one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

In a possible implementation, the configuration information further includes a preset quantity, and the processing unit is further configured for the terminal to stop WUS monitoring, and stop the waking up or not waking up of remaining candidate DRX-ON durations, in a case where a quantity of the target DRX-ON durations waked up by the terminal reaches the preset quantity.

In a possible implementation, in a case where the WUS monitoring position or the WUS monitoring duration overlaps or does not overlap with a DCI in a target format, the processing unit is further configured to perform one or more of the following steps:

monitoring, by the terminal, for the WUS; monitoring, by the terminal, for the DCI in the target format; monitoring, by the terminal, for both the WUS and the DCI in the target format.

In a possible implementation, the WUS is a physical layer signal based on a DCI, or the WUS is physical layer signal based on a sequence.

In a third aspect, an embodiment of the present disclosure provides a discontinuous reception (DRX) communications method. The method includes: transmitting, by a network device, configuration information to a terminal, where the configuration information is used for the terminal to determine one or more target DRX-ON durations within a DRX cycle that are determined based on multiple WUSs.

In a possible implementation, the configuration information includes: relevant information of the WUS monitoring positions and/or the WUS monitoring durations, and/or multiple candidate DRX-ON durations within one DRX cycle.

In a possible implementation, the configuration information includes: relevant information of the WUS monitoring positions and/or the WUS monitoring durations.

In a possible implementation, the configuration information includes: the relevant information of the WUS monitoring positions and/or the WUS monitoring durations, and relevant information of the candidate DRX-ON durations associated with the WUS monitoring positions and/or the WUS monitoring durations.

In a possible implementation, the relevant information of the WUS monitoring positions and/or the WUS monitoring durations at least includes one or more of the following: starting positions of one or more WUS monitoring positions; a duration of continuous monitoring.

In a possible implementation, the relevant information of the candidate DRX-ON duration includes at least one of the following:

offset values of starting positions of one or more candidate DRX-ON durations relative to the WUS monitoring positions; offset values of starting positions of one or more candidate DRX-ON durations relative to the WUS monitoring durations; higher-layer signaling configuration.

In a possible implementation, the configuration information further includes a preset quantity, where the preset quantity is used for the terminal to stop WUS monitoring and stop the waking up or not waking up of remaining candidate DRX-ON durations, in a case where a quantity of the target DRX-ON durations waked up by the terminal reaches the preset quantity.

In a possible implementation, the WUS is a physical layer signal based on a DCI, or the WUS is a physical layer signal based on a sequence.

In a fourth aspect, an embodiment of the present disclosure provides a network device, which includes a transmitting unit configured for the network device to transmit configuration information to a terminal, where the configuration information is used for the terminal to: determine, based on the configuration information, one or more target DRX-ON durations within a DRX cycle that are determined based on multiple wake-up signals (WUSs), perform WUS monitoring, and wake up or not wake up the one or more target DRX-ON durations based on a monitoring result.

In a possible implementation, the configuration information includes: relevant information of the WUS monitoring positions and/or the WUS monitoring durations, and/or multiple candidate DRX-ON durations within one DRX cycle.

In a possible implementation, the configuration information includes: the relevant information of the WUS monitoring positions and/or the WUS monitoring durations.

In a possible implementation, the configuration information includes: the relevant information of the WUS monitoring positions and/or the WUS monitoring durations, and relevant information of candidate DRX-ON durations associated with the WUS monitoring positions and/or the WUS monitoring durations.

In a possible implementation, the relevant information of the WUS monitoring positions and/or the WUS monitoring durations at least includes one or more of the following: starting positions of one or more WUS monitoring positions; a duration of continuous monitoring.

In a possible implementation, the relevant information of the candidate DRX-ON durations includes at least one of the following:

offset values of starting positions of one or more candidate DRX-ON durations relative to the WUS monitoring positions;
offset values of starting positions of one or more candidate DRX-ON durations relative to the WUS monitoring durations;
higher-layer signaling configuration.

In a possible implementation, the configuration information further includes a preset quantity, where the preset quantity is used for the terminal to stop WUS monitoring and stop the waking up or not waking up of remaining candidate DRX-ON durations, in a case where a quantity of the target DRX-ON durations waked up by the terminal reaches the preset quantity.

In a possible implementation, the WUS is a physical layer signal based on a DCI, or the WUS is a physical layer signal based on a sequence.

In a fifth aspect, an embodiment of the present disclosure provides a terminal, including a memory, a transceiver and a processor, where the memory is configured to store a computer program; the transceiver is configured to transmit and receive data under control of the processor; and the processor is configured to read the computer program in the memory to perform the DRX communications method as described in the first aspect.

In a sixth aspect, an embodiment of the present disclosure provides a network device, including a memory, a transceiver and a processor, where the memory is configured to store a computer program; the transceiver is configured to transmit and receive data under control of the processor; and the processor is configured to read the computer program in the memory to perform the DRX communications method as described in the third aspect.

In a seventh aspect, an embodiment of the present disclosure provides a computer readable storage medium, storing a computer program, where the computer program is configured to be executed by a computer to perform the DRX communications method as described in the first aspect or in the third aspect.

In the embodiment of the present disclosure, a network device configures multiple WUS monitoring positions or multiple WUS monitoring durations for a terminal, and determines one or more candidate DRX-ON durations within a DRX cycle based on the multiple WUS monitoring positions or the multiple WUS monitoring durations. In one aspect, more WUS monitoring occasions may be increased, and in another aspect, starting of a DRX-ON duration may be dynamically and flexibly indicated through the WUS. With this method, the timings of the WUS and the data packet are matched, and the waiting delay of data transmission is effectively reduced.

## BRIEF DESCRIPTION OF THE DRAWINGS

FIG. 1a is a schematic diagram showing a DRX mechanism;
FIG. 1b is a schematic diagram showing a scenario where a data packet arrives after a WUS signal;
FIG. 1c is a schematic diagram showing a scenario where the data packet arrives before the WUS signal;
FIG. 2 is a schematic flowchart of a DRX communications method according to an embodiment of the present disclosure;
FIG. 3a to FIG. 3c are schematic diagrams of application scenarios according to embodiments of the present disclosure;

FIG. 4 is a schematic structural diagram of a terminal according to an embodiment of the present disclosure; and

FIG. 5 is another schematic structural diagram of a terminal according to an embodiment of the present disclosure.

## DETAILED DESCRIPTION

In the following, technical solutions in embodiments of the present disclosure will be described in a clear and thorough manner with reference to the drawings related to the embodiments of the present disclosure. Obviously, the described embodiments are a part of, rather than all of, the embodiments of the present disclosure. Based on the embodiments of the present disclosure, a person skilled in the art may, without creative effort, obtain other embodiments, which shall also fall within the scope of the present disclosure.

Terms such as "first" and "second" in the specification and claims of the present disclosure are used to distinguish similar objects, but not to describe a specific sequence or order. It should be understood that data used like this may be interchanged under a proper condition, so that the embodiments of the present disclosure described here may be implemented in a sequence different from those shown or described here. Additionally, the objects distinguished by such terms as "first" and "second" are usually of the same class, and the number of the objects is not limited, for example, a first object may be one or multiple. In addition, term "and/or" in the specification and claims represents at least one of objects connected by the term, and character "/" generally indicates that related objects before and after the character are in an "or" relationship.

For the better understanding of the technical solutions of the embodiments of the present disclosure, the following content will be introduced first.

1) DRX mechanism

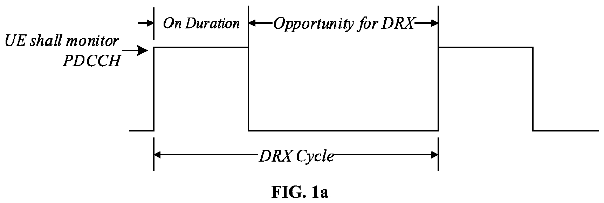

When a DRX group is configured for a user, UE will perform discontinuous PDCCH monitoring on all serving cells. The DRX mechanism is as shown in FIG. 1a. During a DRX cycle, the UE monitors a PDCCH only within the on duration (On duration), and within the Opportunity for DRX, which is DRX off duration, the UE does not receive any PDCCH other than broadcast scheduling signaling, so as to reduce power consumption, namely, to enter a dormancy mode. The on duration refers to a duration in which the following timers do not expire: DRX-ON duration timer (drx-onDurationTimer), DRX inactivity timer (drx-InactivityTimer), downlink DRX retransmission timer (drx-RetransmissionTimerDL), uplink DRX retransmission timer (drx-RetransmissionTimerUL), random access contention resolution timer (ra-ContentionResolutionTimer), and message B response window (msgB-ResponseWindow).

For a long DRX group, a starting time of a DRX-ON duration needs to meet the following relationship:

$$[(\text{SFN} \times 10) + \text{ frame number}] \text{ modulo } (\text{drx} - \text{LongCycle}) = \text{drx} - \text{StartOffset}$$

where SFN denotes system frame number, drx - LongCycle denotes a cycle of a long DRX, and drx - StartOffset denotes an offset of a starting time of the on duration.

2) Characteristics of extended reality (XR) services

Extended reality (XR) is one of the most important types of 5G media applications, and is represented by three representative forms: augmented reality (AR), mixed reality (MR) and virtual reality (VR). XR generates a combination of real and virtual environments and related human-computer interactions by means of computer technologies and a wearable device. The degree of virtualization increases progressively in the order of AR, MR and VR, that is, from the reality augmentation with partial sensory input of a sensor (AR) to the complete virtualization of human perception (VR). The XR devices present visual, audio, or environmental illusions to human.

According to the research on XR services during standalone (SA) 2, SA4 and RANI, the XR services have a nearly-periodic transmission characteristic, namely, a XR service source generates corresponding data packets at a certain refresh rate. For example, a refresh rate of 60 frames (60 FPS) means that 60 data frames are generated per second, with a time gap of 16.67 milliseconds between data frames; a refresh rate of 120 frames (120 FPS) means that 120 data frames are generated per second, with a time gap of 8.33 milliseconds between data frames.

However, after each frame of data packet is generated by a XR service source, it will first undergo procedures such as encoding and network routing, and then reach a base station side. Due to different packet sizes and network congestion conditions in these procedures, the data packets moving from the service source to the base station side may experience varying degrees of delay jitters, and the delay jitters have a certain degree of randomness.

The XR service is sensitive to delay. According to performance requirements on XR service imposed by SA4, the packet delay budget (PDB) is required to be about 10ms to 15ms. While the PDB requirement is set, an average downlink transmission rate of the XR service is required to be about 100Mbps, which means transmitting service information at a relatively higher data rate while meeting the stringent requirement on delay.

3) Rel-16 power-saving signal

In Rel-16, a power-saving signal is configured for a primary cell in the DRX off duration, which has two functions: first, acting as a wake up signal (WUS), that is, indicating whether drx-onDurationTimer for the subsequent long DRX cycle is to be started; second, acting as a dormancy indication for secondary cell (SCell), that is, indicating the dormancy behavior of a SCell group configured by RRC.

The power-saving signal is received in a certain offset time (PS-offset) before the DRX-ON duration, and a specific position of the power-saving signal within the PS-offset is determined by the configuration of the search space set where the power-saving signal (DCI format 2_6) is located. The value of the PS-offset is $120 \times 0.125\text{ms} = 15\text{ms}$. During reception of the power-saving signal, the time when the monitoring for the power-saving signal stops should be at least a minimum time gap (MinTimeGap) ahead of the start of the DRX-ON duration, so that a terminal can have enough time to prepare for wake-up of the subsequent DRX-ON duration. Between the PS-offset and the MinTimeGap, the terminal only monitors the first complete monitoring duration. The value X of the minimum time gap (MinTimeGap) is specified as shown in Table 1:

Table 1

| Subcarrier spacing SCS (kHz) | Minimum Time Gap X (slots) | |
|---|---|---|
| | Value 1 | Value 2 |
| 15 | 1 | 3 |
| 30 | 1 | 6 |
| 60 | 1 | 12 |
| 120 | 2 | 24 |

The power-saving signal is only associated with the adjacent long DRX cycle, and in the case that a short DRX cycle is configured, no power-saving signal is used for indication.

The WUS indication of the power-saving signal of Rel-16 has the following problems.

If a WUS is indicated based on a buffer, the WUS may indicate to UE whether to perform PDCCH monitoring in the subsequent DRX cycle based on whether there is data in the buffer.

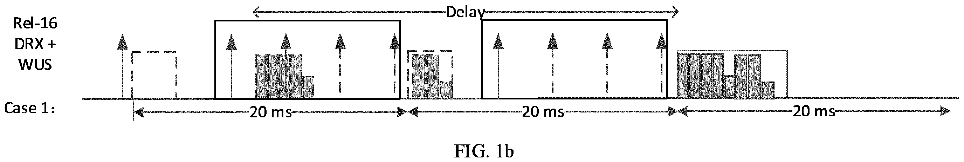

As shown in FIG. 1b, the boxes filled with gray represent data packets, an arrow represents a WUS, a solid box represents a WUS monitoring window, a dashed box represents absence of WUS, and a DRX cycle in the figure lasts 20ms. If a data packet arrives after the WUS signal, because the terminal will not receive any other WUS signals after having successfully received the WUS signal, the terminal is unable to change an on/off state of a DRX activation timer. The data packet has to be transmitted in a next DRX cycle, which increases a waiting delay for transmission.

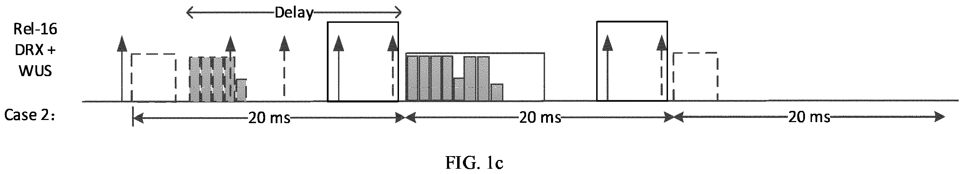

As shown in FIG. 1c, if a data packet arrives before a WUS signal, WUS may indicate that a timer for a next DRX-ON duration is to be started, which however may increase a waiting delay for transmission as well if a distance between the data packet and a starting position of the DRX-ON duration is long.

According to power-saving signals in Rel-16, a maximum PS-offset value ranges from, e.g., 0.125 ms to 15 ms, that is, the maximum gap between a WUS signal monitoring position and the starting position of the DRX-ON duration is 15 ms, which is approximate to a refresh rate of 60 frames per second. Although multiple WUS signal detections may be performed within the PS-offset based on a periodicity configuration of a PDCCH search space, it is defined in the existing protocols that WUS signal detection is only performed in the first complete duration, and WUS detection is not required in other positions. If the PS-offset is set to a relatively small value, once data arrives earlier than the DRX-ON duration or the WUS detection time, the terminal needs to wait until the DRX-ON duration, which degrades the service transmission delay of the terminal to some extent.

A DRX communications method according to embodiments of the present disclosure will be described below in detail using specific embodiments and application scenarios thereof with reference to the drawings.

Technologies described herein are not limited to 5th generation (5G) mobile communication systems and future evolved communication system, and are not limited to long term evolution (LTE)/LTE-advanced (LTE-A) systems, and may also be applied to various radio communications systems such as code division multiple access (CDMA), time division multiple access (TDMA), frequency division multiple access (FDMA), orthogonal frequency division multiple access (OFDMA), single-carrier frequency-division multiple access (SC-FDMA) and other systems.

The terms "system" and "network" are often used interchangeably. The CDMA system may implement radio technologies such as CDMA2000 and universal terrestrial radio access (UTRA). UTRA includes wideband CDMA (WCDMA) and other variants of CDMA. The TDMA system may implement radio technologies such as global system for mobile communication (GSM). The OFDMA system may implement radio technologies such as ultra mobile broadband (UMB), evolved UTRA (E-UTRA), IEEE 802.11 (Wi-Fi), IEEE 802.16 (WiMAX), IEEE 802.20, and Flash-OFDM. UTRA and E-UTRA are parts of universal mobile telecommunications system (UMTS). LTE and more advanced LTE (such as LTE-A) are new UMTS versions using E-UTRA. UTRA, E-UTRA, UMTS, LTE, LTE-A and GSM are described in documents from an organization named "3rd Generation Partnership Project (3GPP)". CDMA2000 and UMB are described in documents from an organization named "3rd Generation Partnership Project 2 (3GPP2)". The technologies described in this specification may be used for the above-mentioned systems and radio technologies, and may also be used for other systems and radio technologies.

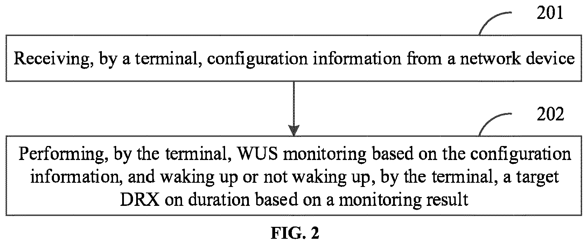

Referring to FIG. 2, an embodiment of the present disclosure provides a DRX communications method, which includes the following steps:

> step 201: receiving, by a terminal, configuration information from a network device; and
> step 202: performing, by the terminal, WUS monitoring based on the configuration information, and waking up or not waking up, by the terminal, a target DRX-ON duration based on a monitoring result.

The above configuration information is used for the terminal to determine one or more target DRX-ON durations within one DRX cycle based on multiple WUSs.

Further, the above configuration information is used for the terminal to determine multiple WUS monitoring positions and/or multiple WUS monitoring durations, and/or multiple candidate DRX-ON durations within one DRX cycle, where starting positions of the multiple candidate DRX-ON durations are determined based on the multiple WUS monitoring positions or the multiple WUS monitoring durations.

In the embodiment of the present disclosure, there may be two manners. In the first manner, the network device configures multiple WUS monitoring positions or multiple WUS monitoring durations, and each WUS monitoring window contains multiple monitoring occasions, which enables the terminal to perform WUS monitoring flexibly at multiple monitoring positions, compared with the mechanism in the related art which has only one WUS monitoring position. In the second manner, the network device configures multiple WUS monitoring positions or multiple WUS monitoring durations, and configures one or more candidate DRX-ON durations in one DRX cycle that are associated with the multiple WUS monitoring positions or the multiple WUS monitoring durations, that is, the starting position of the DRX-ON duration may be determined based on the WUS monitoring position or WUS monitoring duration. That is to say, the terminal can determine the candidate DRX-ON duration based on a detected WUS. In this way, based on information indicated by the detected WUS, the terminal can dynamically and flexibly start a DRX-ON duration corresponding to the detected WUS, namely, the target DRX-ON duration.

In the embodiment of the present disclosure, a network device configures multiple WUS monitoring positions or multiple WUS monitoring durations for a terminal, and one or more candidate DRX-ON durations within a DRX cycle are determined based on the multiple WUS monitoring positions or the multiple WUS monitoring durations. In one aspect, more WUS monitoring occasions may be increased, and in another aspect, starting of a DRX-ON duration may be dynamically and flexibly indicated through the WUS. With this method, the timings of the WUS and the data packet are matched, and the waiting delay of data transmission is effectively reduced.

In a possible implementation, the aforementioned WUS is a physical layer signal based on a DCI, e.g., in a specific format (such as DCI format 2_6); or the WUS is a physical layer signal based on a sequence.

It should be noted that, in the case where the WUS is a physical layer signal based on a DCI, the aforementioned waking up or not waking up the target DRX-ON duration refers to that the terminal determines whether to start the DRX-ON duration timer based on specific indication information in the DCI. In the case where the WUS is a physical layer signal based on a sequence, the WUS indicates a DRX-ON duration rather than waking up or not waking up the DRX-ON duration. Optionally, if a WUS signal is detected, the PDCCH is monitored within an on duration associated with the WUS signal, namely, determining, based on whether a WUS is detected, whether to start an associated DRX-ON duration.

In a possible implementation, according to the two aforementioned manners, configuration information received by the terminal from the network device is as follows.

Corresponding to the first manner, the configuration information includes: configuration information of WUS monitoring positions or WUS monitoring durations; the aforementioned configuration information of the WUS monitoring positions or the WUS monitoring durations is used for the terminal to determine multiple WUS monitoring positions or WUS monitoring durations.

That is, the network side configures multiple WUS monitoring positions or WUS monitoring durations for the terminal.

Corresponding to the second manner, the configuration information includes: configuration information of WUS monitoring positions or WUS monitoring durations, and configuration information of candidate DRX-ON durations associated with the WUS monitoring positions or the WUS monitoring durations; the aforementioned configuration information of the WUS monitoring positions or the WUS monitoring durations is used for the terminal to determine multiple WUS monitoring positions or multiple WUS monitoring durations; the aforementioned configuration information of the candidate DRX-ON durations associated with the WUS monitoring positions or the WUS monitoring durations is used for the terminal to determine starting positions of the DRX-ON durations based on the WUS monitoring positions or the WUS monitoring durations.

That is, the network side device configures for the terminal multiple WUS monitoring positions or WUS monitoring durations, and one or more candidate DRX-ON durations, where a position of the candidate DRX-ON duration has a certain association with the WUS monitoring position or the WUS monitoring duration.

Further, the above-mentioned configuration information of the WUS monitoring positions or the WUS monitoring durations at least includes one or more of the following:

(1) starting positions of one or more WUS monitoring positions;
(2) a duration of continuous monitoring.

In some possible implementations, the configuration information of the WUS monitoring positions or the WUS monitoring durations includes one or more of the following:

(1) a starting position of a first one of the WUS monitoring durations;
(2) monitoring offset values of multiple WUSs;
(3) a time offset value of ending of monitoring;
(4) a time difference between a starting position of a WUS monitoring duration and a starting position of the preceding WUS monitoring duration;
(5) time differences between starting positions of multiple WUS monitoring durations and starting positions of respective preceding WUS monitoring durations;
(6) the quantity of the WUS monitoring durations;
(7) a WUS monitoring duration;
(8) multiple WUS monitoring durations.

Further, the above configuration information of the candidate DRX-ON durations at least includes offset values of starting positions of one or more candidate DRX-ON durations relative to the WUS monitoring positions and/or the WUS monitoring durations, and/or higher-layer signaling configuration.

In some possible implementations, the configuration information of the DRX-ON duration includes one or more of the following:

(1) an offset value of an ending position of a WUS monitoring duration relative to a starting position of the DRX-ON duration;
(2) an offset value of an starting position of the WUS monitoring duration relative to the starting position of the DRX-ON duration;
(3) an offset value of a WUS monitoring position relative to the starting position of the DRX-ON duration;
(4) a set of candidate starting positions configured by a higher-layer signaling, it should be noted that the terminal selects, from the set of candidate starting positions, a candidate starting position that is closest to a detected WUS.

In a possible implementation, corresponding to the first manner, the performing, by the terminal, WUS monitoring based on the configuration information, and waking up or not waking up the target DRX-ON durations in the one or more candidate DRX-ON durations based on the monitoring result includes: performing, by the terminal, multiple WUS monitoring based on the configuration information, and in a case where a detected WUS satisfies a first rule, waking up or not waking up a candidate DRX-ON duration based on indication information of the detected WUS, where the first rule is used for the terminal to determine the indication information of the WUS for waking up or not waking up the candidate DRX-ON duration.

It should be noted that in a scenario to which the first manner is applied, the DRX cycle may be configured in a conventional configuration manner, that is, the DRX parameter being a fixed value. This manner matches timings of the WUS and the data packet by configuring multiple WUS monitoring positions.

Specifically, the performing, by the terminal, the multiple WUS monitoring based on the configuration information, and in a case where the detected WUS satisfies the first rule, waking up or not waking up the candidate DRX-ON duration based on the indication information of the detected WUS includes one or more of the following steps:

(1) for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

(2) in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

(3) in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected; specifically, the terminal is performing WUS monitoring in the multiple WUS monitoring durations.

Optionally, the indication information of the WUS may be indicated by one bit, where a value of "0" indicates that a DRX-ON duration timer is not to be started (off), and the terminal is not to be waked up for performing related PDCCH monitoring; a value of " 1" indicates that the DRX-ON duration timer is to be started, and the terminal is to be waked up for performing related PDCCH monitoring. The specific indication manner of WUS is not limited by the embodiments of the present disclosure.

It should be noted that the specific processing manners of the foregoing steps (1) to (3) can be combined. For example, in practical application scenarios, there may be one WUS in the current DRX cycle, and multiple WUSs in the next DRX cycle. The processing manner used in each DRX cycle may be one of the foregoing steps (1) to (3). Therefore, for the terminal, the specific processing manners of the steps (1) to (3) can be used in combination.

In a possible implementation, corresponding to the second manner, the performing, by the terminal, WUS monitoring based on the configuration information, and waking up or not waking up the target DRX-ON durations among the one or more candidate DRX-ON durations based on the monitoring result includes: performing, by the terminal, multiple WUS monitoring based on the configuration information, and in a case where a detected WUS in one DRX cycle satisfies a second rule, determining a starting position of a candidate DRX-ON duration associated with the detected WUS, and determining to wake up or not wake up the associated candidate DRX-ON duration based on indication information of the detected WUS, where multiple WUS monitoring positions and/or multiple WUS monitoring durations within one DRX cycle correspond to the starting positions of the multiple candidate DRX-ON durations, and the second rule is used for the terminal to determine the indication information in the WUS for waking up or not waking up the candidate DRX-ON duration.

It should be noted that, the performing multiple WUS monitoring may be: monitoring one monitoring window for multiple WUS, or monitoring different monitoring windows for multiple WUS.

It should be noted that in a scenario to which the second manner is applied, the DRX-ON duration may be dynamically adjusted in one DRX cycle. That is, multiple WUS monitoring positions are configured within one DRX cycle, starting positions of multiple candidate DRX-ON durations are determined based on the multiple WUS monitoring positions, and then a starting position of a corresponding target DRX-ON duration is dynamically adjusted based on the position of the detected WUS.

Specifically, the performing, by the terminal, multiple WUS monitoring based on the configuration information, and in a case where the detected WUS in one DRX cycle satisfies the second rule, determining the starting position of the candidate DRX-ON duration associated with the detected WUS, and determining to wake up or not wake up the associated candidate DRX-ON duration based on the indication information of the detected WUS includes one or more of the following steps:

(1) for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS;

(2) performing WUS monitoring on all monitoring occasions in each WUS monitoring duration within one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

Further, the configuration information further includes a preset quantity, and the method further includes: in a case where a quantity of target DRX-ON durations waked up by the terminal reaches the preset quantity, stopping, by the terminal, monitoring for the WUS, and stopping, by the terminal, the step of waking up or not waking up the remaining candidate DRX-ON durations.

In an embodiment of the present disclosure, the network side may also configure a preset quantity for the terminal, and the preset quantity may be 1 or more than 1. When the terminal has waked up the preset quantity of target DRX-ON durations in one DRX cycle using the aforementioned method of waking up DRX-ON durations, the terminal stops WUS monitoring behavior and stops subsequent behavior of waking up or not waking up the remaining candidate DRX-ON durations. In this way, with the configured preset quantity, it is specified how many target DRX-ON durations the terminal can wake up among multiple candidate DRX-ON durations determined based on the multiple WUS monitoring positions and/or the multiple WUS monitoring durations. Setting the preset quantity and stopping the subsequent WUS monitoring behavior when the preset quantity is reached can, to a certain extent, decrease unnecessary monitoring behaviors of the terminal, and achieve power saving of the terminal while ensuring the flexibility of the DRX-ON duration. For situations where multiple data packets arrive in one DRX cycle, the preset quantity may be set to be greater than one, which can improve the probability of data packet transmission and shorten the waiting delay for data packet transmission.

In a possible implementation, in a case where the WUS monitoring position or the WUS monitoring duration overlaps or does not overlap with a monitoring window of a DCI in a target format (such as DCI format 2_6), the method includes one or more of the following:

(1) The terminal monitors for the WUS, that is, the terminal only monitors for a WUS signal; for example, when the DRX-ON duration is dynamically adjustable, if a WUS according to this scheme is configured, and in case that the monitoring window is overlapped, only the WUS signal is monitored for;

(2) The terminal monitors for the DCI in the target format; that is, the terminal only monitors for a DCI format 2_6; for example, the DRX-ON duration is configured based on higher-layer signaling, and has a fixed starting position, if the monitoring duration of the WUS overlaps a monitoring window of the DCI format 2_6, only the DCI format 2_6 is monitored for;

(3) The terminal monitors for both the WUS and the DCI in the target format; that is, the terminal monitors for both the WUS signal and the DCI format 2_6; for example, the WUS signal is a DCI-based signal, the monitoring window of the DCI format 2_6 may be a subset of the WUS monitoring duration, or the DCI format 2_6 is a subset of multiple configured WUSs, or the monitoring position of the DCI format 2_6 does not completely overlap with the monitoring position of the WUS.

First embodiment:

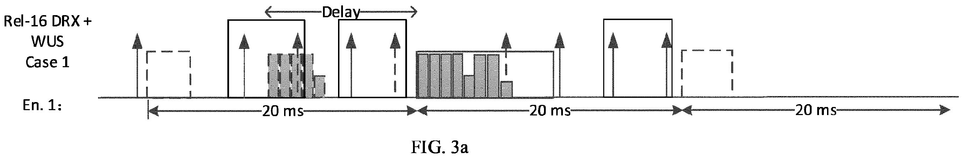

Referring to FIG. 3a, if the DRX cycle is configured using the related art, i.e., values of DRX parameters being fixed, multiple monitoring offset values {WUS-offset_1, WUS-offset_2, ... WUS-offset_N} and monitoring durations {WUS-duration_1, WUS-duration_2, ..., WUS-duration _N} of WUS signals are configured before the DRX-ON duration. Here, WUS-duration_i and WUS-duration_j, $1 \leq i, j \leq N$, may have the same value or different values. The WUS signal is a DCI-based WUS signal, such as DCI format 2_6. In each of the WUS monitoring durations, multiple monitoring occasions may be configured based on a search space configuration of the WUS. In each monitoring duration, the terminal may exhibit one or a combination of the following behaviors:

behavior 1: for each monitoring duration, as long as a WUS signal is detected, not performing WUS monitoring on any other monitoring occasions in this monitoring duration, and waking up or not waking up, by the terminal, a DRX-ON duration timer according to information indicated by the most recently detected WUS signal;

behavior 2: performing WUS monitoring on each WUS monitoring occasion within each monitoring duration, and if multiple WUS signals are detected, waking up or not waking up, the DRX-ON duration timer according to information indicated by the WUS signal that is most recently detected;

behavior 3: for multiple WUS monitoring durations, once information indicated by a WUS signal is detected, not performing further monitoring in any other WUS monitoring durations, and activating or not activating, by the terminal, a DRX-ON duration timer according to information indicated by the detected WUS signal.

For the information indicated by the WUS signal, taking 1-bit indication as an example, a value of "0" indicates that the DRX-ON duration timer is not to be activated (off), and a value of "1" indicates that the DRX-ON duration timer is to be activated.

The "WUS monitoring duration" may be further extended to include one of or a combination of following parameters:

parameter 1: a starting position of the first WUS monitoring duration, namely, WUS-offset_1;

parameter 2: monitoring offset values of multiple WUS signals, namely, {WUS-offset_1, WUS-offset_2, ..., WUS-offset_N};

parameter 3: time offset values of endings of the monitoring, namely, {WUS-end-offset_1, WUS-end-offset_2, ..., WUS-end-offset_N};

parameter 4: a time difference between a starting position of a WUS monitoring duration and a starting position of a preceding WUS monitoring duration, namely, WUS-offset-delta;

parameter 5: time differences between starting positions of WUS monitoring durations and starting positions of respective preceding WUS monitoring durations, namely, {WUS-offset-delta_2, ..., WUS-offset-delta_N};

parameter 6: the quantity N of the WUS monitoring durations;

parameter 7: a monitoring duration of a WUS signal, namely, WUS-duration;

parameter 8: monitoring durations of WUS signals, namely, {WUS-duration_1, WUS-duration_2, ..., WUS-duration_N}, here, WUS-duration_i and WUS-duration_j, $1 \leq i, j \leq N$, may be the same value or different values.

The above parameters are explained by taking examples as follows.

Approach 1: configuring, before the DRX cycle, monitoring offset values of multiple WUS signals {WUS-offset_1, WUS-offset_2, ..., WUS-offset_N} and time offset values of endings of monitoring {WUS-end-offset_1, WUS-end-offset_2, ..., WUS-end-offset_N}.

Approach 2: configuring, before the DRX cycle, a starting position of the first WUS signal monitoring duration WUS-offset_1, a time difference between a starting position of each subsequent WUS monitoring duration and a starting position of a WUS monitoring duration immediately preceding the subsequent WUS monitoring duration WUS-offset-delta, and the quantity N of the WUS monitoring durations.

Approach 3: configuring, before the DRX cycle, a starting position of the first WUS signal monitoring duration WUS-offset_1, time differences between starting positions of subsequent WUS monitoring durations and starting positions of WUS monitoring durations preceding the subsequent WUS monitoring durations respectively {WUS-offset-delta_2, ..., WUS-offset-delta _N}, and the quantity of the WUS monitoring durations. Here, WUS-offset-delta_i and WUS-offset-deltaJ, $2 \leq i, j \leq N$, may be the same value or different values.

Second embodiment:

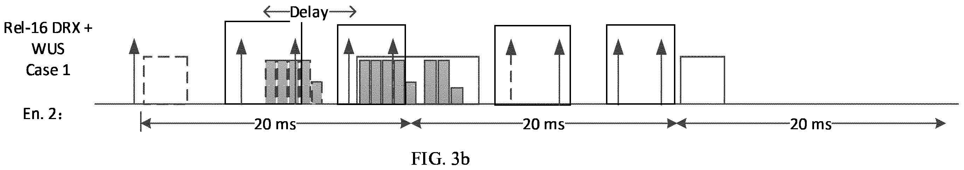

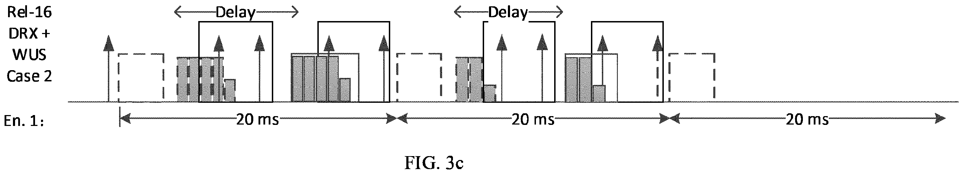

Referring to FIG. 3b and FIG. 3c, if the offset value of the DRX-ON duration can be dynamically adjusted in one DRX cycle, multiple WUS monitoring positions are configured within the DRX cycle. In an embodiment, the WUS monitoring positions are configured by a search space configuration, for example, a WUS monitoring cycle is relatively sparse, and the WUS is monitored for only in the DRX off duration. A base station side configures, for the terminal, offset values of multiple WUS signals relative to a starting position of the DRX-ON duration, namely, DRX-to-WUS. The starting time of the dynamically adjusted DRX-ON duration can be obtained through this offset value. For multiple WUS monitoring occasions, there may be only one DRX-ON duration, or there may be multiple available DRX-ON durations. The terminal's monitoring for the WUS signals may have one of or a combination of the following behaviors.

Behavior 1: in each WUS monitoring duration in one DRX cycle, if the terminal has detected indication information of a WUS signal, the terminal will no longer monitor for any other WUS signals in this DRX cycle. If the WUS signal indicates that the DRX-ON duration is to be waked up, the terminal will start a DRX-ON duration timer at a preconfigured time based on the offset value DRX-to-WUS.

Behavior 2: monitoring multiple WUS signals in each WUS monitoring duration in one DRX cycle. If multiple WUS signals indicate different pieces of information, the latest indication information is taken as the basis.

Optionally, the starting position of DRX-ON duration configured by the base station side for the terminal may also be obtained in one of or a combination of the following manners:

manner 1: an offset value of an ending position of the WUS monitoring duration relative to the starting position of the DRX-ON duration, i.e., DRX-to-WUSend;

manner 2: an offset value of an starting position of the WUS monitoring duration relative to the starting position of the DRX-ON duration, i.e., DRX-to-WUSstart;

manner 3: an offset value of a WUS monitoring position relative to the starting position of the DRX-ON duration, i.e., DRX-to-WUS;

manner 4: a set of candidate starting positions configured by a higher-layer signaling, wherein one of the candidate starting positions that is closest to the detected WUS signal is selected.

Third embodiment:

In the case that the offset value of the DRX-ON duration can be dynamically adjusted within one DRX cycle, multiple WUS monitoring positions or WUS monitoring durations may be configured within one DRX cycle (i.e., starting positions and monitoring durations of WUS monitoring are configured, and configuration manner thereof is the same as that in the first embodiment, which will not be repeated). Unlike the search space configuration, WUS monitoring positions can be configured separately. The base station also configures a possible starting position of the DRX-ON duration for the terminal. Here, the possible starting position of the DRX-ON duration may be an offset value relative to the WUS monitoring position or the WUS monitoring duration, or an offset value relative to the starting position of the WUS, or an offset value relative to an ending position of a WUS monitoring window, or a candidate value configured by a higher layer. The specific configuration manner thereof is similar to that in the second embodiment and will not be repeated.

The subsequent monitoring behavior of the terminal side is the same as that in the second embodiment.

Fourth embodiment:

In the case that the DRX cycle is configured following the related art, namely, the DRX parameters having fixed values, the WUS signal is a sequence-based WUS signal, e.g., one of or a combination of Gold sequence, Hadmand sequence, a reference signal sequence in the related art, etc. (merely to name a few). Monitoring positions of multiple WUS signals or multiple monitoring durations are configured before a DRX-ON duration (e.g., the specific configuration manner thereof is the same as that in the first embodiment), which will not be repeated. Here, a brief example is given: before the DRX-ON duration, monitoring offset values of multiple WUS signals {WUS-offset_1, WUS-offset_2, ..., WUS-offset_N} are configured, and monitoring durations of the WUS signals {WUS-duration_1, WUS-duration_2, ..., WUS-duration _N} are configured. Here, WUS-duration_i and WUS-duration_j may be the same value or different values, where $1 \leq i,j \leq N$. Multiple monitoring positions may be configured in each WUS monitoring duration. In a case where the terminal detects a sequence-based WUS signal, the terminal starts a subsequent DRX-ON duration timer based on indication information of the sequence-based WUS signal, otherwise, the terminal does not start the subsequent DRX-ON duration timer.

Within each monitoring duration, the terminal may exhibit one of or a combination of the following behaviors.

Behavior 1: for each monitoring duration, as long as a WUS signal is detected, WUS will not be monitored for on other monitoring occasions in this monitoring duration. The terminal wakes up, or does not wake up a DRX-ON duration timer according to information indicated by the most recently detected WUS signal.

Behavior 2: monitoring is performed on each WUS monitoring occasion within each monitoring duration, and if multiple WUS signals are detected, the terminal wakes up, or does not wake up a DRX-ON duration timer according to information indicated by the WUS signal that is the most recently detected.

Behavior 3: for multiple WUS monitoring durations, once the information indicated by the WUS signal is detected, no further monitoring will be performed in other WUS monitoring durations of the multiple WUS monitoring durations, and the terminal activates or deactivates the DRX-ON duration timer according to information indicated by the detected WUS signal.

Fifth embodiment:

In the case that the offset value of the DRX-ON duration can be dynamically adjusted in one DRX cycle, multiple WUS monitoring positions or monitoring durations are configured in the DRX cycle. Here, the WUS signal is a sequence-based WUS signal. For the configuration of WUS monitoring durations, reference may be made to the first embodiment, and it will not be elaborated herein. Each WUS monitoring position or monitoring duration corresponds to one candidate DRX-ON duration. The starting position of the DRX-ON duration may be obtained in one of or a combination of the following manners, which are specifically the same as those in the second embodiment:

manner 1: an offset value of an ending position of the WUS monitoring duration relative to the starting position of the DRX-ON duration, i.e., DRX-to-WUSend;
manner 2: an offset value of an starting position of the WUS monitoring duration and the starting position of the DRX-ON duration, i.e., DRX-to-WUSstart;
manner 3: an offset value of a WUS monitoring position relative to the starting position of the DRX-ON duration, i.e., DRX-to-WUS;
manner 4: a set of candidate starting positions of DRX-ON duration configured by a higher-layer signaling, wherein one of the candidate starting positions that is closest to the detected WUS signal is selected.

The subsequent monitoring behavior of the terminal side is the same as that in the second embodiment.

In the case that the terminal detects multiple WUSs, there may be only one DRX-ON duration in one DRX cycle, or there may be multiple DRX-ON durations in one DRX cycle.

Sixth embodiment:

The WUS monitoring position or the WUS monitoring duration configured by a base station side may overlap a monitoring window of a power-saving signal in Rel-16 (DCI format 2_6), and in this case, the terminal behaves in one of or a combination of the following manners.

Manner 1: the terminal only monitors for the WUS signal. For example, in a case where the DRX-ON duration can be dynamically adjusted, if a WUS according to this scheme is configured, and in case that the monitoring window is overlapped, only the WUS signal is monitored for.

Manner 2: the terminal only monitors for DCI format 2_6. For example, the DRX-ON duration is configured based on higher-layer signaling, namely, having a fixed starting position, and if the monitoring duration of the WUS overlaps the monitoring window of the DCI format 2_6, only the DCI format 2_6 is monitored for.

Manner 3: the terminal monitors for both the WUS signal and DCI format 2_6. For example, the WUS signal is a DCI-based signal, the monitoring window of the DCI format 2_6 may be a subset of the WUS monitoring duration, or the DCI format 2_6 is a subset of multiple configured WUSs, or the monitoring position of the DCI format 2_6 does not completely overlap with the monitoring position of the WUS.

In a case where a monitoring position or a monitoring duration for a WUS signal may not overlap with a monitoring window of a power saving signal in Rel-16 (DCI format 2_6), both the WUS signal and DCI format 2_6 may be monitored for, or only the WUS may be monitored for, or one of the WUS signal and DCI format 2_6 may be conditionally selected to be monitored for.

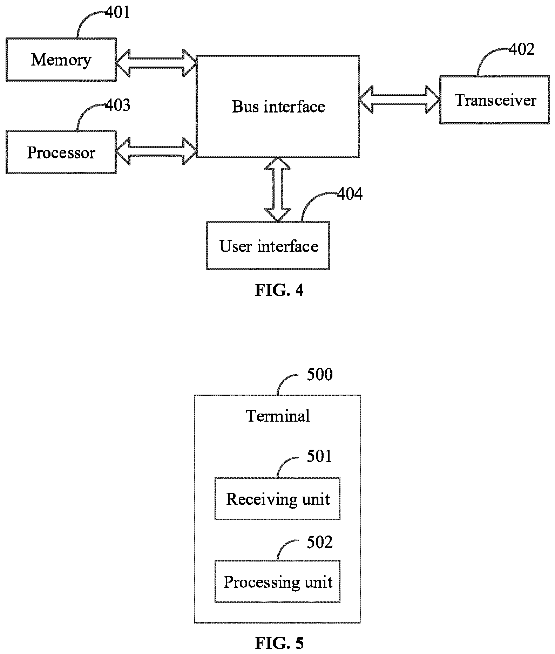

Referring to FIG. 4, an embodiment of the present disclosure provides a terminal, which includes a memory 401, a transceiver 402, a processor 403, and a user interface 404. The transceiver 402 is configured to receive and send data under the control of the processor 403.

In FIG. 4, a bus architecture may include any quantity of interconnected buses and bridges, and connects various circuits including one or more processors represented by the processor 403 and a memory represented by the memory 401. The bus architecture may also connect various other circuits such as peripherals, voltage regulators and power management circuits, which is well known in the art. Therefore, a detailed description thereof is omitted herein. A bus interface provides an interface. The transceiver 402 may be multiple elements, i.e., a transmitter and a receiver, to allow for communication with various other apparatuses on the transmission media. These transmission media include wireless channel, wired channel, optic fiber or the like. For different user equipment, the user interface 404 may be an interface capable of externally or internally connecting a required device, and the connected device includes, but not limited to, a keypad, a display, a speaker, a microphone, a joystick and the like.

The processor 403 is responsible for supervising the bus architecture and normal operations, and the memory 401 may store the data being used by the processor 403 during operations.

Optionally, the processor 403 may be a central processing unit (CPU), an application specific integrated circuit (ASIC), a field-programmable gate array (FPGA) or a complex programmable logic device (CPLD). The processor may also adopt a multi-core architecture.

The processor 403 is configured to read the computer program from the memory 401 to execute the following steps: receiving, by the terminal, configuration information from a network device, where the configuration information is used for the terminal to determine one or more target DRX-ON durations within one DRX cycle based on multiple WUSs; and performing, by the terminal, WUS monitoring based on the configuration information, and waking up or not waking up the one or more target DRX-ON durations based on a monitoring result.

Optionally, the configuration information is used for the terminal to determine multiple WUS monitoring positions and/or multiple WUS monitoring durations, and/or multiple candidate DRX-ON durations within one DRX cycle, where starting positions of the multiple candidate DRX-ON durations are determined based on the multiple WUS monitoring positions or the multiple WUS monitoring durations.

Optionally, the configuration information includes: configuration information of the WUS monitoring positions and/or the WUS monitoring durations. The configuration information of the WUS monitoring positions and/or the WUS monitoring durations is used for the terminal to determine the multiple WUS monitoring positions and/or the multiple WUS monitoring durations.

Optionally, the configuration information includes: configuration information of the WUS monitoring positions and/or the WUS monitoring durations, and configuration information of the candidate DRX-ON durations associated with the WUS monitoring positions and/or the WUS monitoring durations. The configuration information of the WUS monitoring positions and/or the WUS monitoring durations is used for the terminal to determine multiple WUS monitoring positions and/or WUS monitoring durations. The configuration information of the candidate DRX-ON durations associated with the WUS monitoring positions and/or the WUS monitoring durations is used for the terminal to determine starting positions of the candidate DRX-ON durations based on the WUS monitoring positions and/or the WUS monitoring durations.

Optionally, the configuration information of the WUS monitoring positions and/or the WUS monitoring durations at least includes one or more of the following: starting positions of one or more WUS monitoring positions; a duration of continuous monitoring.

Optionally, the configuration information of the candidate DRX-ON durations at least includes: offset values of starting positions of one or more candidate DRX-ON durations relative to the WUS monitoring positions and/or the WUS monitoring durations; and/or higher-layer signaling configuration.

Optionally, the processor 403 is configured for the terminal to perform multiple WUS monitoring based on the configuration information, and in a case where a detected WUS satisfies a first rule, wake up or not wake up a candidate DRX-ON duration based on indication information of the detected WUS, where the first rule is used for the terminal to determine the indication information of the WUS for waking up or not waking up the candidate DRX-ON duration.

Optionally, the processor 403 is configured to perform one or more of the following:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected.

Optionally, the processor 403 is configured for the terminal to perform multiple WUS monitoring based on the configuration information, and in a case where a detected WUS in one DRX cycle satisfies a second rule, determine a starting position of a candidate DRX-ON duration associated with the detected WUS, and determine to wake up or not wake up the associated DRX-ON duration based on indication information of the detected WUS, where multiple WUS monitoring positions and/or multiple WUS monitoring durations within one DRX cycle correspond to the starting positions of the multiple candidate DRX-ON durations, and the second rule is used for the terminal to determine the indication information of the WUS for waking up or not waking up the associated candidate DRX-ON duration.

Optionally, the processor 403 is configured to perform one or more of the following steps:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS;

performing WUS monitoring on all monitoring occasions within each WUS monitoring duration in one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

Optionally, the configuration information further includes a preset quantity, and the processor 403 is configured for the terminal to stop WUS monitoring, and stop the waking up or not waking up of remaining candidate DRX-ON durations, in a case where a quantity of the target DRX-ON durations waked up by the terminal reaches the preset quantity.

Optionally, in a case where the WUS monitoring position or the WUS monitoring duration overlaps or does not overlap with a monitoring window of a DCI in a target format, the processor 403 is configured to perform one or more of the following steps:

monitoring, by the terminal, for the WUS;
monitoring, by the terminal, for the DCI in the target format;
monitoring, by the terminal, for both the WUS and the DCI in the target format.

Optionally, the WUS is a physical layer signal based on a DCI, or the WUS is physical layer signal based on a sequence.

Referring to FIG. 5, an embodiment of the present disclosure provides a terminal 500. The terminal 500 includes:

a receiving unit 501, configured for the terminal to receive configuration information from a network device, where the configuration information is used for the terminal to determine one or more target DRX-ON durations within one DRX cycle based on multiple WUSs; and
a processing unit 502, configured for the terminal to perform WUS monitoring based on the configuration information, and wake up or not wake up the one or more target DRX-ON durations based on a monitoring result.

In a possible implementation, the configuration information is used for the terminal to determine multiple WUS monitoring positions and/or multiple WUS monitoring durations, and/or multiple candidate DRX-ON durations within one DRX cycle, where starting positions of the multiple candidate DRX-ON durations are determined based on the multiple WUS monitoring positions or the multiple WUS monitoring durations.

In a possible implementation, the configuration information includes: configuration information of the WUS monitoring positions and/or the WUS monitoring durations. The configuration information of the WUS monitoring positions and/or the WUS monitoring durations is used for the terminal to determine the multiple WUS monitoring positions and/or the multiple WUS monitoring durations.

In a possible implementation, the configuration information includes: configuration information of the WUS monitoring positions and/or the WUS monitoring durations, and configuration information of the candidate DRX-ON durations associated with the WUS monitoring positions and/or the WUS monitoring durations. The configuration information of the WUS monitoring positions and/or the WUS monitoring durations is used for the terminal to determine multiple WUS monitoring positions and/or WUS monitoring durations. The configuration information of the candidate DRX-ON durations associated with the WUS monitoring positions and/or the WUS monitoring durations is used for the terminal to determine starting positions of the candidate DRX-ON durations based on the WUS monitoring positions and/or the WUS monitoring durations.

In a possible implementation, the configuration information of the WUS monitoring positions and/or the WUS monitoring durations at least includes one or more of the following: starting positions of one or more WUS monitoring positions; a duration of continuous monitoring.

In a possible implementation, the configuration information of the candidate DRX-ON durations at least includes: offset values of starting positions of one or more candidate DRX-ON durations relative to the WUS monitoring positions and/or the WUS monitoring durations; and/or higher-layer signaling configuration.

In a possible implementation, the processing unit is further configured for the terminal to perform multiple WUS monitoring based on the configuration information, and in a case where a detected WUS satisfies a first rule, wake up or not wake up a candidate DRX-ON duration based on indication information of the detected WUS, where the first rule is used for the terminal to determine the indication information of the WUS for waking up or not waking up the candidate DRX-ON duration.

In a possible implementation, the processing unit is further configured to perform one or more of the following steps:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected.

In a possible implementation, the processing unit is further configured for the terminal to perform multiple WUS monitoring based on the configuration information, and in a case where a detected WUS in one DRX cycle satisfies a second rule, determine a starting position of a candidate DRX-ON duration associated with the detected WUS, and determine to wake up or not wake up the associated DRX-ON duration based on indication information of the detected WUS, where multiple WUS monitoring positions and/or WUS monitoring durations within one DRX cycle correspond to the starting positions of the multiple candidate DRX-ON durations, and the second rule is used for the terminal to determine the indication information of the WUS for waking up or not waking up the associated candidate DRX-ON duration.

In a possible implementation, the processing unit is further configured to perform one or more of the following steps:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS;

performing WUS monitoring on all monitoring occasions within each WUS monitoring duration in one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

In a possible implementation, the configuration information further includes a preset quantity, and the processing unit is further configured for the terminal to stop WUS monitoring, and stop the waking up or not waking up of remaining candidate DRX-ON durations, in a case where a quantity of the target DRX-ON durations waked up by the terminal reaches the preset quantity.

In a possible implementation, in a case where the WUS monitoring position or the WUS monitoring duration overlaps or does not overlap with a monitoring window of a DCI in a target format, the processing unit is further configured to perform one or more of the following steps:

monitoring, by the terminal, for the WUS;
monitoring, by the terminal, for the DCI in the target format;
monitoring, by the terminal, for both the WUS and the DCI in the target format.

In a possible implementation, the WUS is a physical layer signal based on a DCI, or the WUS is physical layer signal based on a sequence.

Referring to FIG. 5, an embodiment of the present disclosure provides a terminal. The terminal includes:

a receiving unit, configured for the terminal to receive configuration information from a network device, where the configuration information is used for the terminal to determine multiple WUS monitoring positions and/or multiple WUS monitoring durations, and/or multiple candidate DRX-ON durations in one DRX cycle, and starting positions of the multiple candidate DRX-ON durations are determined based on the multiple WUS monitoring positions or the multiple WUS monitoring durations; and
a processing unit, configured for the terminal to perform WUS monitoring based on the configuration information, and to wake up or not wake up a target DRX-ON duration among one or more candidate DRX-ON durations according to a monitoring result.

In a possible implementation, the configuration information includes: configuration information of the WUS monitoring positions and/or the WUS monitoring durations. The configuration information of the WUS monitoring positions and/or the WUS monitoring durations is used for the terminal to determine the multiple WUS monitoring positions and/or the multiple WUS monitoring durations.

In a possible implementation, the configuration information includes: configuration information of the WUS monitoring positions and/or the WUS monitoring durations, and configuration information of the candidate DRX-ON durations associated with the WUS monitoring positions and/or the WUS monitoring durations. The configuration information of the WUS monitoring positions and/or the WUS monitoring durations is used for the terminal to determine the multiple WUS monitoring positions and/or WUS monitoring durations. The configuration information of the candidate DRX-ON durations associated with the WUS monitoring positions and/or the WUS monitoring durations is used for the terminal to determine starting positions of the candidate DRX-ON durations based on the WUS monitoring positions and/or the WUS monitoring durations.

In a possible implementation, the configuration information of the WUS monitoring positions and/or the WUS monitoring durations at least includes one or more of the following: starting positions of one or more WUS monitoring positions; a duration of continuous monitoring.

In a possible implementation, the configuration information of the candidate DRX-ON durations at least includes: offset values of starting positions of one or more candidate DRX-ON durations relative to the WUS monitoring positions and/or the WUS monitoring durations; and/or higher-layer signaling configuration.

In a possible implementation, the processing unit is further configured for the terminal to perform multiple WUS monitoring based on the configuration information, and in a case where a detected WUS satisfies a first rule, wake up or not wake up a candidate DRX-ON duration based on indication information of the detected WUS, where the first rule is used for the terminal to determine the indication information of the WUS for waking up or not waking up the candidate DRX-ON duration.

In a possible implementation, the processing unit is further configured to perform one or more of the following steps:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;

in a case where the terminal performs WUS monitoring on each WUS monitoring occasion within each WUS monitoring duration among the multiple WUS monitoring durations, and has detected multiple WUSs, waking up or not waking up, by the terminal, the candidate DRX-ON duration based on indication information of a WUS that is most recently detected;

in a case where the terminal has detected a WUS, stopping, by the terminal, WUS monitoring in other WUS monitoring durations of the plurality of WUS monitoring durations, and waking up or not waking up the candidate DRX-ON duration based on indication information of the WUS that has been detected.

In a possible implementation, the processing unit is further configured for the terminal to perform multiple WUS monitoring based on the configuration information, and in a case where a detected WUS in one DRX cycle satisfies a second rule, determine a starting position of a candidate DRX-ON duration associated with the detected WUS, and determine to wake up or not wake up the associated DRX-ON duration based on indication information of the detected WUS, where multiple WUS monitoring positions and/or multiple WUS monitoring durations within one DRX cycle correspond to the starting positions of the multiple candidate DRX-ON durations, and the second rule is used for the terminal to determine the indication information of the WUS for waking up or not waking up the associated candidate DRX-ON duration.

In a possible implementation, the processing unit is further configured to perform one or more of the following steps:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS;

performing WUS monitoring on all monitoring occasions within each WUS monitoring duration in one DRX cycle, and in a case where the terminal has detected multiple WUSs and indication information of the multiple WUSs are different, waking up or not waking up, by the terminal, an associated candidate DRX-ON duration based on indication information of a WUS that is most recently detected.

In a possible implementation, the configuration information further includes a preset quantity, and the processing unit is configured for the terminal to stop WUS monitoring, and stop the waking up or not waking up of remaining candidate DRX-ON durations, in a case where a quantity of the target DRX-ON durations waked up by the terminal reaches the preset quantity.

In a possible implementation, in a case where the WUS monitoring position or the WUS monitoring duration overlaps or does not overlap with a DCI in a target format, the processing unit is configured to perform one or more of the following steps:

monitoring, by the terminal, for the WUS;
monitoring, by the terminal, for the DCI in the target format;
monitoring, by the terminal, for both the WUS and the DCI in the target format.

In a possible implementation, the WUS is a physical layer signal based on a DCI, or the WUS is physical layer signal based on a sequence.

An embodiment of the present disclosure provides a network device. The network device includes: a transmitting unit, configured for the network device to transmit configuration information to a terminal, where the configuration information is used for the terminal to determine, based on the configuration information, one or more target DRX-ON durations within a DRX cycle that are determined based on multiple WUSs; and perform WUS monitoring and wake or not wake up one or more target DRX-ON durations based on the monitoring result.

In a possible implementation, the configuration information includes: relevant information of the WUS monitoring positions and/or the WUS monitoring durations, and/or multiple candidate DRX-ON durations within one DRX cycle.

In a possible implementation, the configuration information includes: relevant information of the WUS monitoring positions and/or the WUS monitoring durations.

In a possible implementation, the configuration information includes: relevant information of the WUS monitoring positions and/or the WUS monitoring durations, and relevant information of the candidate DRX-ON durations associated with the WUS monitoring positions and/or the WUS monitoring durations.

In a possible implementation, the relevant information of the WUS monitoring positions and/or the WUS monitoring durations at least includes one or more of the following: starting positions of one or more WUS monitoring positions; a duration of continuous monitoring.

In a possible implementation, the candidate DRX-ON duration related information includes at least one of the following:

offset values of starting positions of one or more candidate DRX-ON durations relative to the WUS monitoring positions;
offset values of starting positions of one or more candidate DRX-ON durations relative to the WUS monitoring durations;
higher-layer signaling configuration.

In a possible implementation, the configuration information further includes a preset quantity, where the preset quantity is used for the terminal to stop WUS monitoring and stop the waking up or not waking up of remaining candidate DRX-ON durations, in a case where a quantity of the target DRX-ON durations waked up by the terminal reaches the preset quantity.

In a possible implementation, the WUS is a physical layer signal based on a DCI, or the WUS is a physical layer signal based on a sequence.

An embodiment of the present disclosure further provides a computer readable storage medium, on which a computer program or instruction is stored. When the computer program or instruction is executed by a processor, the processor implements various processes in the above embodiments of the DRX communications method, and can achieve the same technical effect, which are not described here to avoid repetition.

The processor is a processor in the electronic device described in the above embodiments. The readable storage medium includes a computer readable storage medium, such as computer read-only memory (ROM), random access memory (RAM), magnetic disk or optical disc.

An embodiment of the present disclosure further provides a chip, which includes a processor and a communication interface. The communication interface is coupled with the processor, and the processor is configured to run a program or instructions to implement various processes in the above embodiments of the DRX communications method, and the same technical effect can be achieved, which are not described here to avoid repetition.

It should be understood that the chip mentioned in the embodiments of the present disclosure may also be referred to as system-level chip, system chip, chip system, or system-on-a-chip, etc.

It should be noted that in this specification, terms "include", "include" and any other variants thereof are intended to cover non-exclusive inclusion, so that a process, a method, an article, or an apparatus that includes a series of elements not only includes these elements, but also includes other elements not expressly listed, or includes elements inherent in this process, method, article, or apparatus. In the absence of more restrictions, an element defined by the statement "including a..." does not exclude another same element in a process, method, article, or apparatus that includes the element. In addition, it should be noted that the scope of the methods and devices in the embodiments of the present disclosures is not limited to performing functions in the order as shown or described, but may also include performing functions in a substantially simultaneous manner or in an opposite order according to the involved functions. For example, the described methods may be executed in an order different from the described order, and various steps may be added, omitted, or combined. Additionally, features described with reference to certain examples can be combined in other examples.

From the foregoing description of the embodiments, a person skilled in the art will appreciate clearly that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in a form of a software product. The software product is stored in a storage medium (e.g., a read only memory (ROM)/ random access memory (RAM), a magnetic disk and an optical disc) and includes several instructions adapted to be executed by a terminal device (such as a handset, a computer, an apparatus, an air conditioner or a network device) to perform the method according to the embodiments of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASICs), or one or more microprocessors (digital signal processor, DSP), or one or more field programmable gate arrays (FPGAs). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described above with reference to the accompanying drawings, but the present disclosure is not limited to the foregoing specific implementations. The foregoing specific implementations are merely schematic instead of being restrictive. Under enlightenment of the present disclosure, a person of ordinary skills in the art may make many forms without departing from the purpose of this disclosure and the scope of claims, all of which shall fall within the scope of the present disclosure.

**Claims**

1. A discontinuous reception (DRX) communications method, comprising:

    receiving, by a terminal, configuration information from a network device;
    determining, by the terminal based on the configuration information, one or more target DRX-ON durations within a DRX cycle that are determined based on a plurality of wake-up signals (WUSs); and
    performing, by the terminal, WUS monitoring, and waking up or not waking up, by the terminal, the one or more target DRX-ON durations based on a monitoring result.

2. The DRX communications method according to claim 1, wherein the determining, by the terminal based on the configuration information, the one or more target DRX-ON durations within the DRX cycle that are determined based on the plurality of WUSs comprises:
    determining, by the terminal based on the configuration information, a plurality of WUS monitoring positions and/or a plurality of WUS monitoring durations, and/or a plurality of candidate DRX-ON durations within one DRX cycle, wherein starting positions of the plurality of candidate DRX-ON durations are determined based on the plurality of WUS monitoring positions or the plurality of WUS monitoring durations.

3. The DRX communications method according to claim 2, wherein the configuration information comprises: relevant information of the WUS monitoring positions and/or the WUS monitoring durations; and
    the determining, by the terminal based on the configuration information, the plurality of WUS monitoring positions and/or the plurality of WUS monitoring durations comprises:
    determining, by the terminal, the plurality of WUS monitoring positions and/or the plurality of WUS monitoring durations based on the relevant information of the WUS monitoring positions and/or the WUS monitoring durations.

4. The DRX communications method according to claim 2, wherein the configuration information comprises: relevant information of the WUS monitoring positions and/or the WUS monitoring durations, and relevant information of candidate DRX-ON durations associated with the WUS monitoring positions and/or the WUS monitoring durations; and
    the determining, by the terminal based on the configuration information, the plurality of WUS monitoring positions and/or the plurality of WUS monitoring durations, and the plurality of candidate DRX-ON durations within one DRX cycle comprises:

determining, by the terminal, the plurality of WUS monitoring positions and/or the plurality of WUS monitoring durations based on the relevant information of the WUS monitoring positions and/or the WUS monitoring durations; and/or

determining, by the terminal, the starting positions of the candidate DRX-ON durations based on the relevant information of the candidate DRX-ON durations associated with the WUS monitoring positions and/or the WUS monitoring durations.

5. The DRX communications method according to claim 3 or 4, wherein the relevant information of the WUS monitoring positions and/or the WUS monitoring durations at least comprises one or more of the following:

starting positions of one or more WUS monitoring positions;
a duration of continuous monitoring.

6. The DRX communications method according to claim 4, wherein the relevant information of the candidate DRX-ON durations comprises at least one of the following:

offset values of starting positions of one or more candidate DRX-ON durations relative to the WUS monitoring positions;
offset values of starting positions of one or more candidate DRX-ON durations relative to the WUS monitoring durations;
higher-layer signaling configuration.

7. The DRX communications method according to claim 1, wherein the performing, by the terminal, WUS monitoring, and waking up or not waking up, by the terminal, the target DRX-ON durations based on the monitoring result comprises:

performing, by the terminal, a plurality of WUS monitoring, determining, by the terminal, a detected target WUS according to a first rule, and waking up or not waking up, by the terminal, a candidate DRX-ON duration based on indication information of the detected target WUS,
wherein the first rule is used for the terminal to determine the target WUS during the plurality of WUS monitoring durations.

8. The DRX communications method according to claim 7, wherein the performing, by the terminal, the plurality of WUS monitoring, determining, by the terminal, the detected target WUS according to the first rule, and waking up or not waking up, by the terminal, the candidate DRX-ON duration based on the indication information of the detected target WUS comprises one or more of the following:

for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up, by the terminal, the candidate DRX-ON duration based on indication information of the most recently detected WUS;
in a case where the terminal performs WUS monitoring on each WUS monitoring occasion within each WUS monitoring duration among the plurality of WUS monitoring durations, and has detected a plurality of WUSs, waking up or not waking up, by the terminal, the candidate DRX-ON duration based on indication information of a WUS that is most recently detected;
in a case where the terminal has detected a WUS within the plurality of WUS monitoring durations, stopping, by the terminal, WUS monitoring in other WUS monitoring durations of the plurality of WUS monitoring durations, and waking up or not waking up, by the terminal, the candidate DRX-ON duration based on indication information of the WUS that has been detected.

9. The DRX communications method according to claim 4, wherein the performing, by the terminal, WUS monitoring, and waking up or not waking up, by the terminal, the target DRX-ON durations based on the monitoring result comprises:

performing, by the terminal, a plurality of WUS monitoring, determining, by the terminal, a detected target WUS within one DRX cycle according to a second rule, determining, by the terminal, a starting position of a candidate DRX-ON duration associated with the detected target WUS, and determining, by the terminal, to wake up or not wake up the associated DRX-ON duration based on indication information of the detected target WUS,

wherein the plurality of WUS monitoring positions and/or the plurality of WUS monitoring durations within one DRX cycle correspond to the starting positions of the plurality of candidate DRX-ON durations, and the second rule is used for the terminal to determine the target WUS during the DRX cycle.

10. The DRX communications method according to claim 9, wherein the performing, by the terminal, the plurality of WUS monitoring, determining, by the terminal, the detected target WUS within one DRX cycle according to the second rule, determining, by the terminal, the starting position of the candidate DRX-ON duration associated with the detected target WUS, and determining, by the terminal, to wake up or not wake up the associated DRX-ON duration based on the indication information of the detected target WUS comprises one or more of the following:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS; for each WUS monitoring duration in one DRX cycle, in a case where the terminal performs monitoring on all monitoring occasions within the WUS monitoring duration, and the terminal has detected a plurality of WUSs and indication information of the plurality of WUSs are different, waking up or not waking up, by the terminal, an associated candidate DRX-ON duration based on indication information of a WUS that is most recently detected.

11. The DRX communications method according to claim 4, wherein the configuration information further comprises a preset quantity, and the method further comprises:
in a case where a quantity of the target DRX-ON durations waked up by the terminal reaches the preset quantity, stopping, by the terminal, WUS monitoring, and stopping, by the terminal, the waking up or not waking up of remaining candidate DRX-ON durations.

12. The DRX communications method according to claim 2, wherein in a case where the WUS monitoring position or the WUS monitoring duration overlaps or does not overlap with a monitoring window of downlink control information (DCI) in a target format, the method comprises one or more of the following:

monitoring, by the terminal, for the WUS;
monitoring, by the terminal, for the DCI in the target format;
monitoring, by the terminal, for both the WUS and the DCI in the target format.

13. The DRX communications method according to claim 2, wherein the WUS is a physical layer signal based on a DCI, or the WUS is a physical layer signal based on a sequence.

14. A terminal, comprising:

a receiving unit, configured to receive configuration information from a network device; and
a processing unit, configured to determine, based on the configuration information, one or more target DRX-ON durations within a DRX cycle that are determined based on a plurality of WUSs, perform WUS monitoring by the terminal, and wake up or not wake up the one or more target DRX-ON durations based on a monitoring result.

15. The terminal according to claim 14, wherein the processing unit is further configured to:
determine, based on the configuration information, a plurality of WUS monitoring positions and/or a plurality of WUS monitoring durations, and/or a plurality of candidate DRX-ON durations within one DRX cycle, wherein starting positions of the plurality of candidate DRX-ON durations are determined based on the plurality of WUS monitoring positions or the plurality of WUS monitoring durations.

16. The terminal according to claim 15, wherein the configuration information comprises:

relevant information of the WUS monitoring positions and/or the WUS monitoring durations; and
the processing unit is further configured to determine the plurality of WUS monitoring positions and/or the plurality of WUS monitoring durations based on the relevant information of the WUS monitoring positions and/or the WUS monitoring durations.

17. The terminal according to claim 15, wherein the configuration information comprises:

relevant information of the WUS monitoring positions and/or the WUS monitoring durations, and relevant information of candidate DRX-ON durations associated with the WUS monitoring positions and/or the WUS monitoring durations;

the processing unit is further configured for the terminal to determine the plurality of WUS monitoring positions and/or the plurality of WUS monitoring durations based on the relevant information of the WUS monitoring positions and/or the WUS monitoring durations; and/or

the processing unit is further configured for the terminal to determine the starting positions of the candidate DRX-ON durations based on the relevant information of the candidate DRX-ON durations associated with the WUS monitoring positions and/or the WUS monitoring durations.

18. The terminal according to claim 16 or 17, wherein the relevant information of the WUS monitoring positions and/or the WUS monitoring durations at least comprises one or more of the following:

   starting positions of one or more WUS monitoring positions;
   a duration of continuous monitoring.

19. The terminal according to claim 17, wherein the relevant information of the candidate DRX-ON durations comprises at least one of the following:

   offset values of starting positions of one or more candidate DRX-ON durations relative to the WUS monitoring positions;
   offset values of starting positions of one or more candidate DRX-ON durations relative to the WUS monitoring durations;
   higher-layer signaling configuration.

20. The terminal according to claim 14, wherein the processing unit is further configured for the terminal to: perform a plurality of WUS monitoring, determine a detected target WUS according to a first rule, and wake up or not wake up a candidate DRX-ON duration based on indication information of the detected target WUS,
   wherein the first rule is used for the terminal to determine the target WUS during the plurality of WUS monitoring durations.

21. The terminal according to claim 20, wherein the processing unit is further configured to perform one or more of the following steps:

   for each WUS monitoring duration among the plurality of WUS monitoring durations, in a case where the terminal has detected a WUS, stopping, by the terminal, WUS monitoring on other monitoring occasions in the WUS monitoring duration, and waking up or not waking up the candidate DRX-ON duration based on indication information of the most recently detected WUS;
   in a case where the terminal performs WUS monitoring on each WUS monitoring occasion within each WUS monitoring duration among the plurality of WUS monitoring durations, and has detected a plurality of WUSs, waking up or not waking up, by the terminal, the candidate DRX-ON duration based on indication information of a WUS that is most recently detected;
   in a case where the terminal has detected a WUS within the plurality of WUS monitoring durations, stopping, by the terminal, WUS monitoring in other WUS monitoring durations of the plurality of WUS monitoring durations, and waking up or not waking up the candidate DRX-ON duration based on indication information of the WUS that has been detected.

22. The terminal according to claim 17, wherein the processing unit is further configured for the terminal to:

   perform a plurality of WUS monitoring, determine a detected target WUS within one DRX cycle according to a second rule, determine a starting position of a candidate DRX-ON duration associated with the detected target WUS, and determine to wake up or not wake up the associated DRX-ON duration based on indication information of the detected target WUS,
   wherein the plurality of WUS monitoring positions and/or the plurality of WUS monitoring durations within one DRX cycle correspond to the starting positions of the plurality of candidate DRX-ON durations, and the second rule is used for the terminal to determine the target WUS during the DRX cycle.

23. The terminal according to claim 22, wherein the processing unit is further configured to perform one or more of the following steps:

for each WUS monitoring duration in one DRX cycle, in a case where the terminal has detected a WUS, stopping, by the terminal, monitoring for other WUSs in the WUS monitoring duration, and waking up or not waking up, by the terminal, an associated candidate DRX-ON duration based on indication information of the detected WUS; for each WUS monitoring duration in one DRX cycle, in a case where the terminal performs monitoring on all monitoring occasions within the WUS monitoring duration, and the terminal has detected a plurality of WUSs and indication information of the plurality of WUSs are different, waking up or not waking up, by the terminal, an associated candidate DRX-ON duration based on indication information of a WUS that is most recently detected.

24. The terminal according to claim 17, wherein the configuration information further comprises a preset quantity, the processing unit is further configured for the terminal to: stop WUS monitoring and stop the waking up or not waking up of remaining candidate DRX-ON durations, in a case where a quantity of the target DRX-ON durations waked up by the terminal reaches the preset quantity.

25. The terminal according to claim 15, wherein in a case where the WUS monitoring position or the WUS monitoring duration overlaps or does not overlap with a monitoring window of DCI in a target format, the processing unit is further configured to perform one or more of the following steps:

monitoring, by the terminal, for the WUS;
monitoring, by the terminal, for the DCI in the target format;
monitoring, by the terminal, for both the WUS and the DCI in the target format.

26. The terminal according to claim 15, wherein the WUS is a physical layer signal based on a DCI, or the WUS is physical layer signal based on a sequence.

27. A discontinuous reception (DRX) communications method, comprising:
transmitting, by a network device, configuration information to a terminal, wherein the configuration information is used for the terminal to determine, based on the configuration information, one or more target DRX-ON durations within a DRX cycle that are determined based on a plurality of wake-up signals (WUSs).

28. The DRX communications method according to claim 27, wherein the configuration information comprises: relevant information of WUS monitoring positions and/or WUS monitoring durations, and/or a plurality of candidate DRX-ON durations within one DRX cycle.

29. The DRX communications method according to claim 28, wherein the configuration information comprises: the relevant information of the WUS monitoring positions and/or the WUS monitoring durations.

30. The DRX communications method according to claim 28, wherein the configuration information comprises: the relevant information of the WUS monitoring positions and/or the WUS monitoring durations, and relevant information of candidate DRX-ON durations associated with the WUS monitoring positions and/or the WUS monitoring durations.

31. The DRX communications method according to claim 29 or 30, wherein the relevant information of the WUS monitoring positions and/or the WUS monitoring durations at least comprises one or more of the following:

starting positions of one or more WUS monitoring positions;
a duration of continuous monitoring.

32. The DRX communications method according to claim 30, wherein the relevant information of the candidate DRX-ON durations comprises at least one of the following:

offset values of starting positions of one or more candidate DRX-ON durations relative to the WUS monitoring positions;
offset values of starting positions of one or more candidate DRX-ON durations relative to the WUS monitoring durations;
higher-layer signaling configuration.

33. The DRX communications method according to claim 30, wherein the configuration information further comprises a preset quantity,
wherein the preset quantity is used for the terminal to stop WUS monitoring, and stop the waking up or not waking up of remaining candidate DRX-ON durations, in a case where a quantity of the target DRX-ON durations waked up by the terminal reaches the preset quantity.

34. The DRX communications method according to claim 30, wherein the WUS is a physical layer signal based on a DCI, or the WUS is a physical layer signal based on a sequence.

35. A network device, comprising:
a transmitting unit, configured for the network device to transmit configuration information to a terminal, wherein the configuration information is used for the terminal to: determine, based on the configuration information, one or more target DRX-ON durations within a DRX cycle that are determined based on a plurality of wake-up signals (WUSs), perform WUS monitoring, and wake up or not wake up the one or more target DRX-ON durations based on a monitoring result.

36. The network device according to claim 35, wherein the configuration information comprises: relevant information of WUS monitoring positions and/or WUS monitoring durations, and/or a plurality of candidate DRX-ON durations within one DRX cycle.

37. The network device according to claim 36, wherein the configuration information comprises: the relevant information of the WUS monitoring positions and/or the WUS monitoring durations.

38. The network device according to claim 36, wherein the configuration information comprises: the relevant information of the WUS monitoring positions and/or the WUS monitoring durations, and relevant information of candidate DRX-ON durations associated with the WUS monitoring positions and/or the WUS monitoring durations.

39. The network device according to claim 37 or 38, wherein the relevant information of the WUS monitoring positions and/or the WUS monitoring durations at least comprises one or more of the following:

starting positions of one or more WUS monitoring positions;
a duration of continuous monitoring.

40. The network device according to claim 38, wherein the relevant information of the candidate DRX-ON durations comprises at least one of the following:

offset values of starting positions of one or more candidate DRX-ON durations relative to the WUS monitoring positions;
offset values of starting positions of one or more candidate DRX-ON durations relative to the WUS monitoring durations;
higher-layer signaling configuration.

41. The network device according to claim 38, wherein the configuration information further comprises a preset quantity,
wherein the preset quantity is used for the terminal to stop WUS monitoring and stop the waking up or not waking up of remaining candidate DRX-ON durations, in a case where a quantity of the target DRX-ON durations waked up by the terminal reaches the preset quantity.

42. The network device according to claim 38, wherein the WUS is a physical layer signal based on a DCI, or the WUS is a physical layer signal based on a sequence.

43. A terminal, comprising a memory, a transceiver and a processor,
wherein the memory is configured to store a computer program; the transceiver is configured to transmit and receive data under control of the processor; and the processor is configured to read the computer program in the memory to perform the DRX communications method according to any one of claims 1 to 13.

44. A network device, comprising a memory, a transceiver and a processor,
wherein the memory is configured to store a computer program; the transceiver is configured to transmit and receive data under control of the processor; and the processor is configured to read the computer program in the memory to perform the DRX communications method according to any one of claims 27 to 34.

45. A computer readable storage medium, storing a computer program, wherein the computer program is configured to cause a computer to perform the DRX communications method according to any one of claims 1 to 13; or, the computer program is configured to cause the computer to perform the DRX communications method according to any one of claims 27 to 34.

FIG. 1a

Rel-16
DRX +
WUS

Case 1:

Delay

20 ms

20 ms

20 ms

FIG. 1b

FIG. 1c

201

Receiving, by a terminal, configuration information from a network device

202

Performing, by the terminal, WUS monitoring based on the configuration information, and waking up or not waking up, by the terminal, a target DRX on duration based on a monitoring result

**FIG. 2**

FIG. 3a

FIG. 3b

FIG. 3c

FIG. 4

FIG. 5

## INTERNATIONAL SEARCH REPORT

International application No.

**PCT/CN2022/107915**

| A. | CLASSIFICATION OF SUBJECT MATTER |
|---|---|
| | H04W 76/28(2018.01)i |

According to International Patent Classification (IPC) or to both national classification and IPC

| B. | FIELDS SEARCHED |
|---|---|

Minimum documentation searched (classification system followed by classification symbols)

H04W; H04L; H04Q7/-

Documentation searched other than minimum documentation to the extent that such documents are included in the fields searched

Electronic data base consulted during the international search (name of data base and, where practicable, search terms used)

CNTXT, WPABSC, ENTXTC, 3GPP, CNKI: DRX, 非连续接收, 激活, 活动, WUS, 唤醒信号, 省电信号, 节能信号, 多个, 配置, 信息, 监听, 接收, 时机, 周期, 偏移, Discontinuous Reception, activation, Wake-Up Signal, multiple, configuration, information, listen, reception, timing, period, offset

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021056546 A1 (GUANGDONG OPPO MOBILE TELECOMMUNICATIONS CORP., LTD.) 01 April 2021 (2021-04-01)<br>description, page 2, line 20 to page 13, line 37, and figures 1-9 | 1-45 |
| A | WO 2020091422 A1 (LG ELECTRONICS INC.) 07 May 2020 (2020-05-07)<br>entire document | 1-45 |
| A | CN 112997542 A (QUALCOMM INC.) 18 June 2021 (2021-06-18)<br>entire document | 1-45 |
| A | CN 110958668 A (TELECOMMUNICATIONS TECHNOLOGY RESEARCH INSTITUTE CO., LTD.) 03 April 2020 (2020-04-03)<br>entire document | 1-45 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2022** | **21 October 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107915**

| Patent document cited in search report | | | Publication date (day/month/year) | Patent family member(s) | | | Publication date (day/month/year) |
|---|---|---|---|---|---|---|---|
| WO | 2021056546 | A1 | 01 April 2021 | KR | 20220074823 | A | 03 June 2022 |
| | | | | EP | 3937441 | A1 | 12 January 2022 |
| | | | | US | 2022039014 | A1 | 03 February 2022 |
| WO | 2020091422 | A1 | 07 May 2020 | None | | | |
| CN | 112997542 | A | 18 June 2021 | WO | 2020102018 | A1 | 22 May 2020 |
| | | | | EP | 3881609 | A1 | 22 September 2021 |
| | | | | US | 2020154355 | A1 | 14 May 2020 |
| | | | | SG | 11202103897U | A | 28 May 2021 |
| CN | 110958668 | A | 03 April 2020 | TW | 202013923 | A | 01 April 2020 |
| | | | | KR | 20210063420 | A | 01 June 2021 |
| | | | | EP | 3860229 | A1 | 04 August 2021 |
| | | | | WO | 2020063654 | A1 | 02 April 2020 |
| | | | | US | 2021410067 | A1 | 30 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110904394